# EUROPÄISCHE PATENTANMELDUNG

(11) **EP 0 881 022 A1**
(43) Veröffentlichungstag der Anmeldung: **02.12.1998**
(21) Anmeldenummer: 98810414.7
(22) Anmeldetag: 07.05.1998
(51) Int. Cl.: B23D 23/00, B23D 35/00

(54) **Schneidbacke für Gewindeschere**

(30) Priorität: 30.05.1997 DE 19722839
(71) Anmelder: HILTI Aktiengesellschaft, 9494 Schaan (LI)
(72) Erfinder: Sedlmeier, Andreas, 86932 Ummendorf (DE)
(74) Vertreter: Wildi, Roland

(57) **Zusammenfassung**

Es ist eine Schneidbacke für eine Gewindeschere mit zwei Scherbalken beschrieben. Auf jeden Scherbalken ist eine Schneidbacke (1) montiert. Die Schneidbacken (1) sind an ihren einander zugekehrten Seitenflächen (7) mit halbzylinderförmigen Ausnehmungen (2) versehen, die in den Stirnflächen (5, 6) der Schneidbacken (1) münden und deren Wandung (3) mit einem Innengewindeabschnitt (4) ausgestattet sind. Die Anordnung der Schneidbacken (1) an den Scherbalken ist derart, dass die halbzylinderförmigen Ausnehmungen (2) einander in axialer Projektion zu einem Vollkreis ergänzen. Dabei verlaufen die einander zugewandten Stirnflächen (5, 6) parallel zueinander und bilden im Betrieb aneinander abgleitende Trennflächen. Jede Schneidbacke (1) weist eine Höhe (H) auf, die ein ganzzahliges Vielfaches der Gewindeganghöhe (P) plus einer halben Gewindeganghöhe (P) beträgt. Der Gewindeauslauf (11, 12) an den beiden Stirnflächen (5, 6) der Schneidbacke (1) ist invariant gegenüber einer Umkehrung der axialen Orientierung der Stirnflächen (5, 6).

## Beschreibung

Die Erfindung betrifft eine Schneidbacke für eine Gewindeschere gemäss dem Oberbegriff des Patentanspruchs 1.

In vielen Anwendungen im Baubereich und insbesondere in der Befestigungs- und Montagetechnik ist es erforderlich, mit einem Aussengewinde versehene Stangen oder Rohre abzulängen. Beispielsweise werden die üblicherweise aus Metall bestehenden Stangen oder Rohre mit Sägen oder Trennschleifgeräten auf die gewünschte Länge gekürzt. Dabei wird das Aussengewinde vielfach stark in Mitleidenschaft gezogen und muss das Gewinde beispielsweise durch Anfacettieren der Schnittfläche wieder gangbar gemacht werden. Dieser Vorgang ist mühsam und zeitaufwendig; er führt nicht immer zum gewünschten Ergebnis und beinhaltet die Gefahr, dass das Gewinde unbrauchbar wird und die mit dem Aussengewinde versehene Stange bzw. das Rohr ersetzt werden muss.

Zur Vereinfachung des Ablängvorgangs kommen daher vielfach Gewindescheren zum Einsatz. Diese scherenartigen Geräte sind an ihren beiden Scherbalken mit je einer Schneidbacke ausgestattet, die an ihren einander zugekehrten Seiten halbkreisförmige Ausnehmungen aufweisen, die mit einem Innengewinde ausgestattet sind. Die halbkreisförmigen Ausnehmungen münden an den Stirnflächen der Schneidbacken. Die Schneidbacken werden paarweise zusammengehörig hergestellt, wobei die Innengewinde in den halbkreisförmigen Vertiefungen derart aufeinander abgestimmt sind, dass beim Ablängen der Gewindestange das Gewinde an der Schnittfläche nicht beschädigt wird. Die Innengewinde der Schneidbacken sind jeweils paarweise zusammengehörig erstellt, wobei bereits auf ihre Gebrauchslage an den Scherbalken der Gewindeschere Rücksicht genommen wird. Die paarweise zusammengehörigen Schneidbacken müssen daher jeweils lagerichtig an dem einen oder dem anderen Scherarm angeordnet werden. Kennzeichnungen an den Schneidbacken und an den Scherbalken der Gewindeschere sollen die korrekte Montage erleichtern. Dennoch kommt es immer wieder vor, dass die Schneidbacken falsch montiert werden, was zu Beschädigungen am Gewinde der zu schneidenden Gewindestange und schliesslich zu Beschädigungen oder zum Bruch der Schneidbacken führen kann. Im Fall einer Beschädigung einer der Schneidbacken müssen diese immer paarweise ausgewechselt werden, da jedes Schneidbackenpaar ein Unikat darstellt. Eine Mischung von Schneidbacken verschiedener Paare untereinander kann selbst bei einer lagerichtigen Montage an dem einen und dem anderen Scherbalken zu Beschädigungen am Gewinde der Gewindestange und an den Schneidbacken selbst führen, da die Innengewinde der Schneidbacken nicht aufeinander abgestimmt sind.

Von der Herstellung der Innengewinde und dem Härtungsprozess der Lagerbacken, über ihre Lagerhaltung beim Hersteller, der Anlieferung an den Händler und den Kunden bis zur Lagerung beim Kunden und schliesslich zum Auswechseln an der Gewindeschere müssen die Schneidbacken immer paarweise gehandhabt werden. Es muss sorgfältig darauf geachtet werden, die paarweise zusammengehörigen Schneidbacken nicht miteinander zu vermischen. Dies stellt einen erheblichen logistischen Aufwand für den Hersteller, den Händler und nicht zuletzt auch für den Kunden dar. Zudem ist es für den Anwender äusserst unbefriedigend und stellt eine Vergeudung von Zeit, Material und Investitionskosten dar, im Fall einer Beschädigung nur einer der Schneidbacken dennoch immer jeweils beide Schneidbacken an den Scherbalken auswechseln zu müssen.

Aufgabe der vorliegenden Erfindung ist es daher, diesen Nachteilen des Stands der Technik abzuhelfen. Es soll eine Schneidbacke für eine Gewindeschere geschaffen werden, deren einwandfreie Funktion nicht von der lagekorrekten Montage der Schneidbacken abhängt. Die Schneidbacke soll beliebig auf dem einen oder dem anderen Scherbalken der Gewindeschere montierbar sein und sie soll mit beliebigen anderen Schneidbacken ihrer Gattung einsetzbar sein. Im Fall einer Beschädigung einer der Schneidbacken soll nur diese eine Schneidbacke ausgewechselt werden können, ohne Gefahr zu laufen, im Betrieb der Gewindeschere das Gewinde der Gewindestange und/oder die Schneidbacken zu beschädigen. Der logistische Aufwand für die Herstellung, die Lagerhaltung und die Montage der Schneidbacken soll reduziert werden können. Schliesslich soll die Schneidbacke auch einen Kostenvorteil für den Hersteller und den Kunden bieten.

Die Lösung dieser Aufgaben besteht in einer Schneidbacke mit den im kennzeichnenden Abschnitt des Patentanspruchs 1 angeführten Merkmalen. Insbesondere wird durch die Erfindung eine Schneidbacke für eine Gewindeschere mit zwei Scherbalken geschaffen, wobei jeder Scherbalken mit einer Schneidbacke ausgestattet ist. Die Schneidbacken sind an ihren einander zugekehrten Seitenflächen mit halbzylinderförmigen Ausnehmungen versehen, die in den Stirnflächen der Schneidbacken münden und deren Wandung mit einem Innengewindeabschnitt ausgestattet sind. Die Anordnung der Schneidbacken an den Scherbalken ist derart, dass die halbzylinderförmigen Ausnehmungen einander in axialer Projektion zu einem Vollkreis ergänzen. Die einander zugewandten Stirnflächen verlaufen parallel zueinander und bilden im Betrieb aneinander abgleitende Trennflächen. Jede Schneidbacke weist eine Höhe auf, die ein ganzzahliges Vielfaches der Gewindeganghöhe plus einer halben Gewindeganghöhe beträgt. Der Gewindeauslauf an den beiden Stirnflächen der Schneidbacke ist invariant gegenüber einer Umkehrung der axialen Orientierung der Stirnflächen.

Durch die erfindungsgemässe Ausbildung der Schneidbacke kann diese beliebig auf dem einen oder dem anderen Scherbalken der Gewindeschere montiert werden. Durch die gewählte Höhe der Schneidbacke und durch die erfindungsgemässe Anordnung des Gewindeauslaufs an den Stirnflächen kann sie auch um 180° gedreht werden, wobei die zuvor untere Stirnfläche nach oben zu liegen kommt, ohne dass sich dabei an der Orientierung des Innengewindes etwas ändert. Durch die Anordnung des Gewindeauslaufs setzt sich das Innengewinde der ersten Schneidbacke über die Trennfläche hinweg in der gegenüberliegenden, axial um die Höhe der Schneidbacke versetzten zweiten Schneidbacke fort. Der Gewindeauslauf der einen Schneidbacke geht in den als Gewindeanfang wirkenden Gewindeauslauf der benachbarten zweiten Schneidbacke über. Die auf den beiden Scherbalken montierten Schneidbacken sind identisch ausgebildet. Dadurch können sie beliebig getauscht werden. Da alle Schneidbacken bezüglich ihrer Höhe und ihres Gewindeauslaufs identisch sind, braucht bei einer Beschädigung einer der Schneidbacken nur diese eine gegen eine andere gattungsgemässe Schneidbacke gewechselt werden. Die zweite unversehrte Schneidbacke kann montiert bleiben, bis es aufgrund ihrer Abnutzung ebenfalls erforderlich ist, sie zu wechseln. Der Logistikaufwand wird für den Hersteller, den Händler und den Kunden deutlich vereinfacht. Keiner der Betroffenen braucht sich mehr um eine paarweise Zusammengehörigkeit von Schneidbacken kümmern. Durch die Reduktion des Logistikaufwands können auch die Herstellungskosten reduziert werden. Die Schneidbacken müssen nicht mehr paarweise verpackt werden, was auch den Aufwand für Verpackungsmaterial reduziert. Indem die Schneidbacken einzeln, in beliebiger Lage wechselbar sind, entfällt die Gefahr einer Verwechslung und einer nicht lagegerechten Montage der Schneidbacken. Da es keine fehlerhafte Orientierung der Schneidbacken mehr gibt, entfällt auch die Gefahr, im Betrieb der Gewindeschere das Gewinde der Gewindestange und/oder die Schneidbacken zu beschädigen.

Indem der Gewindeauslauf an den Stirnflächen an den Kanten verläuft, die von der Seitenfläche und der jeweiligen Stirnfläche gebildet sind, liegen in axialer Projektion die Gewindeausläufe einander auf einem die Basis der halbkreisförmigen Ausnehmung bildenden Durchmesser gegenüber. Bei dieser Anordnung liegt an einem Ende der Höhe des Schneidbackens ein durchgehender halber Gewindegang vor. Dadurch wird die Stabilität des Gewindes im Auslaufbereich erhöht, was die Standzeit der Schneidbacken verbessert.

Indem der Innengewindeabschnitt in der Wandung der halbzylindrischen Ausnehmung Teil eines metrischen Gewindes oder Teil eines Zollgewindes ist, kann die Gewindeschere an die jeweiligen lokalen Gegebenheiten angepasst werden. Im Fall von abzulängenden metrischen Gewindestangen werden Schneidbacken mit metrischem Innengewinde montiert, bei Zollgewinden kommen solche mit Zoll-Innengewinde zur Anwendung. Es versteht sich, dass der Durchmesser der halbzylindrischen Ausnehmung in der Schneidbacke an die gängigen Durchmesser der Gewindestangen angepasst ist. Auf diese Weise kann eine Gewindeschere sehr einfach für das Ablängen von Ankerstangen mit 8 mm, 10 mm, 12 mm und grösser eingerichtet werden. Im Fall von Gewindestangen oder Rohren mit Zolldurchmessern, werden entsprechend mit Zolldurchmessern versehene Schneidbacken verwendet.

Für die Standzeit der Schneidbacken erweist es sich von Vorteil, wenn wenigstens die mit dem Innengewindeabschnitt versehe Wandung der Ausnehmung, die Stirnflächen und die Seitenfläche aus einem gehärteten Stahl bestehen.

In einer sehr einfachen Methode werden die Schneidbacken durch Umformtechnologien hergestellt. In einer alternativen Ausführungsvariante ist die Schneidbacke ein Sinterteil. Diese Variante eignet sich insbesondere für ein grosstechnisches Herstellungsverfahren, bei dem auch die eingesetzten Materialien variiert und den jeweiligen Bedürfnissen angepasst werden können.

Besonders verschleissfeste Schneidbacken bestehen aus einer Hartmetallegierung, wie sie beispielsweise auch für die Herstellung von Schneidkörpern von Bohrwerkzeugen eingesetzt wird.

Eine Gewindeschere, die mit den erfindungsgemäss ausgebildeten Schneidbacken ausgestattet ist, weist eine hohe Standzeit auf und ist problemlos in ihrer Anwendung. Die Schneidbacken sind lösbar an den Scherbalken montierbar und leicht auswechselbar. Die Gewindeschere ist für das Ablängen von Gewindestangen verschiedener Durchmesser geeignet und schnell umrüstbar. Dabei können Vorkehrungen für die lagerichtige Montage der erfindungsgemässen Schneidbacken entfallen, da wegen der identischen Ausbildung der Schneidbacken eine Fehlmontage durch Verwechslung ausgeschlossen ist. Indem die Gewindeschere mit Schneidbacken ausgerüstet ist, die paarweise unterschiedliche Durchmesser der halbzylinderförmigen Ausnehmung aufweisen, kann sie sie zur Ablängung von Gewindestangen oder Rohren verschiedener Aussendurchmesser eingesetzt werden.

Im folgenden wird die Erfindung anhand eines in den schematischen Zeichnungen dargestellten Ausführungsbeispiels näher erläutert. Es zeigen in unterschiedlichen Massstäben:
- Fig. 1: eine perspektivische Darstellung eines Ausführungsbeispiels einer Schneidbacke; und
- Fig. 2: eine Draufsicht auf ein Schneidbackenpaar gemäss Fig. 1 in Gebrauchsstellung.

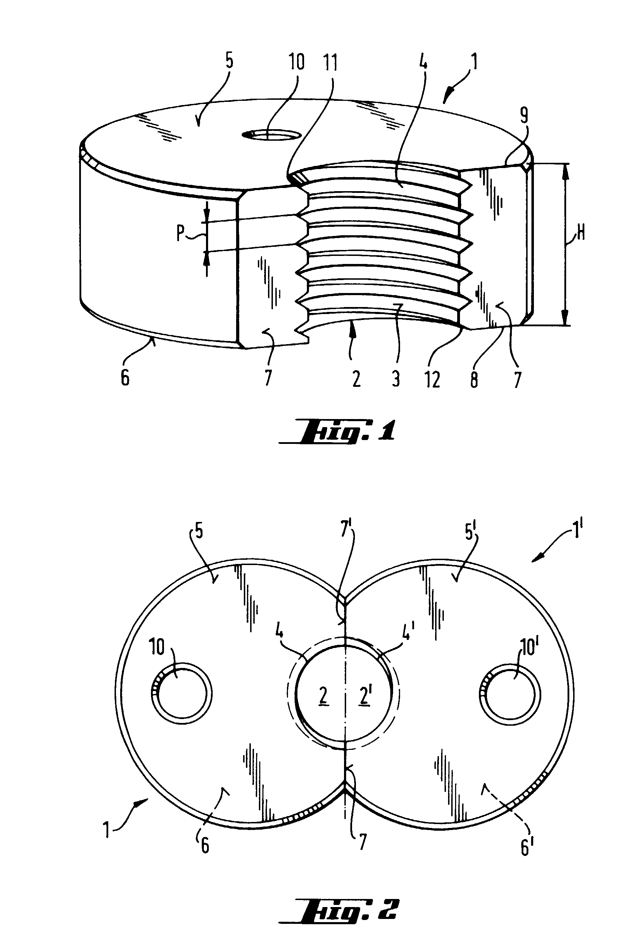

Ein Ausführungsbeispiel einer erfindungsgemässen Schneidbacke für eine Gewindeschere ist in Fig. 1 gesamthaft mit dem Bezugszeichen 1 versehen. Die Schneidbacke 1 kann, wie dargestellt, im wesentlichen ein zylindrischer Block sein. Die Aussenkontur der Schneidbacke 1 muss jedoch nicht kreissegmentförmig sein; sie kann beliebige Formen annehmen, die es erlauben, die Schneidbacke 1 unverlierbar und lösbar an einem Scherbalken einer Gewindeschere zu fixieren. Die Schneidbacke 1 weist planparallele Stirnflächen 5, 6 auf, in denen eine Durchgangsbohrung 10 zur Aufnahme von Fixiermitteln an den Scherarmen der Gewindeschere mündet. Eine ebene Seitenfläche 7 verläuft senkrecht zu den Stirnflächen 5, 6. In Gebrauchsstellung sind die Seitenflächen 7 von paarweise montierten Schneidbacken 1 parallel zueinander ausgerichtet.

Von der Seitenfläche 7 erstreckt sich eine im Querschnitt halbkreisförmige Aus- nehmung 2 in das Innere der Schneidbacke 1. Die Wandung 3 der Ausnehmung 2 ist mit einem Innengewindeabschnitt 4 versehen. Bei zwei in Gebrauchsstellung angeordneten Schneidbacken 1 ergänzen sich die Ausnehmungen 2 zu einem kreisförmigen Querschnitt. Die Innengewindeabschnitte 4 in den Wandungen 3 der Ausnehmungen 2 ergänzen sich zu einem durchgängigen Innengewinde, das an den Stirnflächen 5 und 6 der Schneidbacken mündet. Der Abstand zweier benachbarter Gewindegänge wird als Gewindeganghöhe P bezeichnet. Gemäss der Erfindung weist die Schneidbacke 1 eine Höhe H auf, die ein ganzzahliges Vielfaches der Gewindeganghöhe P plus einer halben Gewindeganghöhe P beträgt. Das Innengewinde 4 läuft an den von den Stirnflächen 5, 6 und der planen Seitenfläche gebildeten Kanten 8, 9 aus. Dabei liegen in axialer Projektion die Gewindeausläufe 11, 12 einander auf einem die Basis der halbkreisförmigen Ausnehmung 2 bildenden Durchmesser gegenüber.

Fig. 2 zeigt eine Draufsicht auf zwei identisch ausgebildete Schneidbacken 1, 1' in Gebrauchsstellung. Dabei ist die rechte Schneidbacke 1' gegenüber der linken Schneidbacke 1 axial um die Höhe der Schneidbacke 1' versetzt angeordnet. Die dem Betrachter zugewandte Stirnseite 5 der linken Schneidbacke 1 befindet sich somit um die Höhe der Schneidbacke 1'tiefer als die analoge Stirnseite 5' der rechten Schneid- backe 1'. Die Ausnehmungen 2, 2' der beiden Schneidbacken 1, 1' ergänzen sich in Draufsicht zu einem Vollkreis; die Innengewindeabschnitte zu einem durchgängigen Innengewinde 4, 4', wobei der Gewindeauslauf an der vorderen, rechten Schneidbacke 1' in den Gewindeauslauf an der um die Höhe der Schneidbacke 1' tiefer angeordneten linken Schneidbacke 1 übergeht. Die Seitenflächen 7, 7' verlaufen parallel zueinander und bilden die Trennflächen der paarweise montierten Schneidbacken 1, 1'. Beim Ablängen einer Gewindestange gleiten die dem Betrachter zugewandte, tiefer angeordnete Stirnfläche 5 der linken Schneidbacke 1 und die vom Betrachter abgewandte Stirn- fläche 6' der rechten Schneidbacke 1' aneinander ab.

Die Gewindebacke 1 kann aus einem Metallblock umformtechnisch hergestellt und gehärtet sein. Sie kann auch ein Sinterteil sein, das insbesondere aus verschleissfestem Hartmetall besteht, wie es beispielsweise auch für die massentechnische Herstellung von Schneidplatten oder Schneidköpfen von Gesteins- oder Betonbohrern verwendet wird. Der Innendurchmesser der Ausnehmung 2 ist auf den Aussendurchmesser der gängigen Gewindestangen abgestimmt. Der Innengewindeabschnitt 4 in der Wandung 3 der Ausnehmung 2 der Schneidbacke 1 kann beispielsweise Teil eines metrischen oder eines Zollgewindes sein.

Die erfindungsgemässe Schneidbacke 1 kann beliebig auf dem einen oder dem anderen Scherbalken einer Gewindeschere montiert werden. Durch die gewählte Höhe H der Schneidbacke 1, die ein ganzzahliges Vielfaches der Gewindeganghöhe P plus einer halben Gewindeganghöhe P beträgt, und durch die erfindungsgemässe Anordnung des Gewindeauslaufs 11, 12 an den Stirnflächen 5, 6 kann die Schneidbacke 1 auch um 180° gedreht werden, wobei die zuvor untere Stirnfläche 6 nach oben zu liegen kommt und umgekehrt, ohne dass sich dabei an der Orientierung des Innengewindeabschnitts 4 etwas ändert. Durch die Anordnung des Gewindeauslaufs 11, 12 setzt sich das Innengewinde 4 der ersten Schneidbacke 1 über die Trennfläche hinweg in der gegenüberliegenden, axial um die Höhe H der Schneidbacke versetzten zweiten Schneidbacke fort. Der Gewindeauslauf der einen Schneidbacke geht in den als Gewindeanfang wirkenden Gewindeauslauf der benachbarten zweiten Schneidbacke über. Die auf den beiden Scherbalken montierten Schneidbacken 1 sind identisch ausgebildet. Dadurch können sie beliebig getauscht werden. Da alle Schneidbacken 1 bezüglich ihrer Höhe H und ihres Gewindeauslaufs 11, 12 identisch sind, braucht bei einer Beschädigung einer der Schneidbacken 1 nur diese eine gegen eine andere gattungsgemässe Schneidbacke gewechselt werden. Die zweite unversehrte Schneidbacke 1 kann montiert bleiben, bis es aufgrund ihrer Abnutzung ebenfalls erforderlich ist, sie zu wechseln. Der Logistikaufwand wird für den Hersteller, den Händler und den Kunden deutlich vereinfacht. Keiner der Betroffenen braucht sich mehr um eine paarweise Zusammengehörigkeit von Schneidbacken kümmern. Durch die Reduktion des Logistikaufwands können auch die Herstellungskosten reduziert werden. Die Schneidbacken 1 müssen nicht mehr paarweise verpackt werden, was auch den Aufwand für Verpackungsmaterial reduziert. Indem die Schneidbacken einzeln, in beliebiger Lage wechselbar sind, entfällt die Gefahr einer Verwechslung und einer nicht lagegerechten Montage der Schneidbacken. Da es keine fehlerhafte Orientierung der Schneidbacken 1 mehr gibt, entfällt auch die Gefahr, im Betrieb der Gewindeschere das Gewinde der Gewindestange und/oder die Schneidbacken zu beschädigen.

## Patentansprüche

1. Schneidbacke für eine Gewindeschere mit zwei Scherbalken, wobei je eine Schneidbacke (1) auf einem der Scherbalken montierbar ist und die Schneidbacken (1) an ihren einander zugekehrten Seitenflächen (7) mit halbzylinderförmigen Ausnehmungen (2) versehen sind, die in den Stirnflächen (5, 6) der Schneidbacken (1) münden und deren Wandung (3) mit einem Innengewindeabschnitt (4) ausgestattet sind, und die Schneidbacken (1) in Gebrauchsstellung derart an den Scherbalken angeordnet sind, dass die halbzylinderförmigen Ausnehmungen (2) einander in axialer Projektion zu einem Vollkreis ergänzen und die einander zugewandten Stirnflächen (5, 6) parallel zueinander verlaufen und im Betrieb aneinander abgleitende Trennflächen bilden, **dadurch gekennzeichnet**, dass jede Schneidbacke (1) eine Höhe (H) aufweist, die ein ganzzahliges Vielfaches der Gewindeganghöhe (P) plus einer halben Gewindeganghöhe (P) beträgt, wobei die Anordung des Gewindeauslaufs (11, 12) an den beiden Stirnflächen (5, 6) der Schneidbacke (1) invariant ist gegenüber einer Umkehrung der axialen Orientierung der Stirnflächen (5, 6).

2. Schneidbacke nach Anspruch 1, dadurch gekennzeichnet, dass der Gewindeauslauf (11, 12) an den Stirnflächen (5, 6) an den Kanten (8, 9) verläuft, die von der Seitenfläche (7) und der jeweiligen Stirnfläche (6, 5) gebildet sind, wobei in axialer Projektion die Gewindeausläufe (11, 12) einander auf einem die Basis der halbkreisförmigen Ausnehmung (2) bildenden Durchmesser gegenüberliegen.

3. Schneidbacke nach Anspruch 1 oder 2, dadurch gekennzeichnet, dass der Innengewindeabschnitt (4) in der Wandung (3) der Ausnehmung (2) Teil eines metrischen Gewindes ist.

4. Schneidbacke nach Anspruch 1 oder 2, dadurch gekennzeichnet, dass der Innengewindeabschitt (4) in der Wandung (3) der Ausnehmung (2) Teil eines Zollgewindes ist.

5. Schneidbacke nach einem der vorangehenden Ansprüche, dadurch gekennzeichnet, dass wenigstens die mit dem Innengewindeabschnitt (4) versehene Wandung (3) der Ausnehmung (2), die Stirnflächen (5, 6) und die Seitenfläche (7) aus einem gehärteten Stahl bestehen.

6. Schneidbacke nach einem der vorangehenden Ansprüche, dadurch gekennzeichnet, dass sie umformtechnisch hergestellt ist.

7. Schneidbacke nach einem der Ansprüche 1 - 5, dadurch gekennzeichnet, dass sie ein Sinterteil ist.

8. Schneidbacke nach Anspruch 7, dadurch gekennzeichnet, dass sie aus Hartmetall besteht.

9. Gewindeschere umfassend wenigstens zwei an ihren Scherbalken lösbar befestigte, einander gegenüberliegende Schneidbacken (1) gemäss einem der vorangehenden Ansprüche.
